# EUROPEAN PATENT APPLICATION

(11) **EP 2 671 644 A1**
(43) Date of publication of application: **11.12.2013**
(21) Application number: 13159252.9
(22) Date of filing: 14.03.2013
(51) Int. Cl.: B05B 1/16, E03C 1/04, B05B 1/18, B05B 1/30, F16K 11/22

(54) **Water passage switching device and hand shower head comprising the water passage switching device**

(30) Priority: 16.03.2012 JP 2012059844; 09.08.2012 JP 2012177273
(71) Applicant: Toto Ltd., Kitakyushu-shi, Fukuoka 802-8601 (JP)
(72) Inventor: Aihara, Yutaka, Kitakyushu-shi, Fukuoka 802-8601 (JP); Miura, Tsuyoshi, Kitakyushu-shi, Fukuoka 802-8601 (JP); Ishiyama, Sho, Kitakyushu-shi, Fukuoka 802-8601 (JP); Murata, Tsuyoshi, Kitakyushu-shi, Fukuoka 802-8601 (JP); Komatani, Yoshikazu, Kitakyushu-shi, Fukuoka 802-8601 (JP); Uemura, Yasufumi, Kitakyushu-shi, Fukuoka 802-8601 (JP); Tanabe, Masaya, Kitakyushu-shi, Fukuoka 802-8601 (JP)
(74) Representative: Takeuchi, Maya

(57) **Abstract**

Provided is a water passage switching device that can be built in a small space. A water passage switching device of the present invention includes a rotational lock member pivotable between a locking position and an unlocking position; a plurality of operation cams moved between initial and pressed-down positions; a plurality of operation members that opens and closes valve elements; and an engaging portion that is formed to extend from the rotational lock member and holds the operation cam at the pressed-down position, wherein, when a first operation cam of the plurality of operation cams is pressed, the engaging portion is pushed to pivot the rotational lock member from the locking position to the unlocking position, thereby returning a second operation cam kept at the pressed-down position to the initial position, and when the first operation cam is pressed to the pressed-down position, the rotational lock member is returned to the locking position to keep the first operation cam at the pressed-down position.

## Description

### BACKGROUND OF THE INVENTION

### (1) Field of the Invention

The present invention relates to a water passage switching device, and in particular to a water passage switching device capable of switching between water passages by opening and closing a plurality of valves with a pushing operation, and to a hand shower head comprising the water passage switching device.

### (2) Description of Related Art

In recent years, a hand shower head which can be used by switching a plurality of water spouting modes has been developed. In such a hand shower head, the water spouting patterns are changed by switching between internal water passages by operating valve elements housed in a shower head body.

JP 6-41887 Y describes a water passage switching valve. This water passage switching valve is built in a household water purifier, and is designed such that water spouting patterns can be switched to filtrated water, raw water, and shower water by pushing three push-buttons arranged on a straight line. In the water passage switching valve described in JP 6-41887 Y, balls are used as three valve elements that switch the three water passages, respectively. When a user presses any of the push-buttons, the distal end of the push-button moves the corresponding ball to open the valve.

The water passage switching valve includes a sliding plate to keep the pressed push-button at a pressed-down position. When one push-button is moved to the pressed-down position, the sliding plate is slid, and another push-button that has been kept at the pressed-down position is unlocked to return to the initial position. On the other hand, when the pressed push-button is moved to the pressed-down position, the sliding plate is returned to the original position, and the pressed push-button is kept at the pressed-down position. In this case, the ball corresponding to the pressed push-button is moved from a valve seat to open the valve. On the other hand, the ball corresponding to the push-button returned to the initial position is seated on the valve seat to open the valve. In this manner, water spouting corresponding to the push-button that is returned to the initial position is stopped, and water spouting corresponding to the push-button that is kept at the pressed-down position is started.

In this manner, in the water passage switching valve described in JP 6-41887 Y, the push-buttons are pushed to make it possible to easily switch between a plurality of water passages, thereby improving operability.

However, in the water passage switching valve described in JP 6-41887 Y, each of the push-buttons is kept at the pressed-down position, and the sliding plate is slidably moved to cancel the kept state. For this purpose, in the water passage switching valve described in JP 6-41887 Y, an additional space to slidably move the sliding plate is required, and such a mechanism is difficult to be built in a hand shower head having a general size.

Furthermore, when this mechanism is employed, a plurality of push-buttons are required to be arranged on a straight line, and the operability is reduced if the mechanism is built in the hand shower head or the like. In other words, when the water spouting patterns of the hand shower head are switched, the push-buttons are preferably operated with a finger of a hand which is holding the shower head in terms of operability. However, in the water passage switching valve described in JP 6-41887 Y, since the plurality of push-buttons are arranged on one straight line, the operating finger is required to be greatly moved, and the push-buttons are difficult to be operated with the finger of the hand which is holding the shower head. In particular, the hand shower head is generally operated with a wet finger in a bathroom, and thus, a slight difference in operability greatly influences user's operation feeling.

It is therefore an object of the present invention to provide a water passage switching device that can open and close a plurality of valves by a pushing operation and can be built in a small space, and a hand shower head comprising the water passage switching device.

It is also an object of the present invention to provide a water passage switching device in which an operation portion to open and close a plurality of valves can be collectively arranged, and a hand shower head comprising the water passage switching device.

### SUMMARY OF THE INVENTION

In order to accomplish the above object, the present invention provides a water passage switching device capable of switching between water passages by opening and closing a plurality of valves by operation of a user, including: a rotational lock member disposed between a locking position and an unlocking position such that the rotational lock member is pivoted about a central axis; a plurality of operation cams disposed along the rotational lock member, movably supported in directions approximately parallel to the central axis, and moved between an initial position and a pressed-down position; a plurality of operation members that are disposed to be moved together with the operation cams and cause an operation force to be applied to valve elements of a plurality of valves to open and close the valve elements; a cam biasing unit that biases the plurality of operation cams to the initial position; a plurality of pushed portions that are disposed in the rotational lock member and abutted with the operation cams to pivot the rotational lock member about the central axis; and a plurality of engaging portions formed on the rotational lock member, each of the engaging portions including an engaging pawl engaged with the operation cam to keep the operation cam at the pressed-down position, the device further including a lock member biasing member biasing the rotational lock member toward the locking position, wherein when a first operation cam of the plurality of operation cams is pressed from the initial position by an operation force, the pushed portion is pushed by the first operation cam to pivot the rotational lock member from the locking position to the unlocking position, thereby canceling engagement between a second operation cam kept at the pressed-down position and the engaging pawl to return the second operation cam to the initial position, and when the first operation cam is pressed to the pressed-down position, the rotational lock member is returned to the locking position to keep the first operation cam at the pressed-down position.

In the above water passage switching device of the present invention, the plurality of operation cams biased toward the initial position by the cam biasing unit is movably supported and moved between the initial position and the pressed-down position. The plurality of operation members are disposed to be moved together with the operation cam, and an operation force is applied to the valve elements of the plurality of valves to open and close the valve elements. On the other hand, the rotational lock member, which is disposed between the locking position and the unlocking position such that the rotational lock member can be pivoted about the central axis, has a plurality of engaging portions. Each of the engaging portions includes an engaging pawl that is engaged with the operation cam to keep the operation cam at the pressed-down position. The rotational lock member is biased by the lock member biasing member toward the locking position, and the plurality of operation cams are disposed along a path in which the rotational lock member pivots. In this case, when the first operation cam of the plurality of operation cams is pressed from the initial position by the operation force, the pushed portion is pushed by the first operation cam to pivot the rotational lock member from the locking position to the unlocking position. With this pivoting operation to the unlocking position, engagement between the second operation cam kept at the pressed-down position and the engaging pawl is canceled to return the second operation cam to the initial position. Furthermore, when the first operation cam is pressed to the pressed-down position, the rotational lock member is returned to the locking position to keep the first operation cam at the pressed-down position.

According to the above water passage switching device of the present invention, since the rotational lock member disposed between the locking position and the unlocking position is pivotally configured, the water passage switching device can be built in a small space. Further, according to the present invention, since the plurality of operation cams are disposed along a path in which the rotational lock member pivots, the operation portion can be collectively arranged to make it possible to improve the operability.

Preferably, the water passage switching device of the present invention further includes: a resetting cam disposed along the rotational lock member, movably supported in a direction approximately parallel to the central axis, and moved between an initial position and a pressed-down position; a resetting cam biasing unit that biases the resetting cam toward the initial position; and a resetting protrusion that is provided on the rotational lock member and pivots the rotational lock member to the unlocking position when the resetting cam is pressed to the pressed-down position, wherein the resetting cam is returned to the initial position when a pressing force applied to the resetting cam is removed.

In the above water passage switching device of the present invention, when the resetting cam is pressed to the pressed-down position, the rotational lock member is pivoted to the unlocking position. At this time, all the operation cams kept at the pressed-down position are returned to the initial position, and the resetting cam is also returned to the initial position when the pressing force applied to the resetting cam is removed.

According to the above water passage switching device of the present invention, regardless of the state each of the operation cams is set in, all the operation cams can be returned to the initial state by operating the resetting cam once.

Preferably, the water passage switching device of the present invention further includes a tilting operation member that is tilted about a pivot point arranged on the central axis to press the operation cams to the pressed-down position is further provided.

According to the above water passage switching device of the present invention, the tilting operation member is tilted to make it possible to press the operation cams to the pressed-down position, and the portion that performs the operation can be collectively arranged.

Preferably, in the water passage switching device of the present invention, the rotational lock member is an annular member.

According to the above water passage switching device of the present invention, since the rotational lock member is annular, the rotational lock member is not easily deformed by an external force to rotationally drive the rotational lock member, and the rotational lock member can be reliably operated.

Preferably, in the water passage switching device of the present invention, the cam biasing unit is configured by a member that biases the operation cam toward the initial position.

According to the above water passage switching device of the present invention, since the cam biasing unit is configured by a member that biases the operation cam toward the initial position, a stable biasing force can always be obtained, and the operation cam can be reliably returned to the initial position.

Preferably, in the water passage switching device of the present invention, the resetting cam biasing unit is configured by a member that biases the resetting cam toward the initial position.

According to the above water passage switching device of the present invention, since the resetting cam biasing unit is configured by a member that biases the resetting cam toward the initial position, a stable biasing force can always be obtained, and the resetting cam can be reliably returned to the initial position.

Preferably, in the water passage switching device of the present invention, the pushed portion and the engaging portion which are disposed on the rotational lock member are integrally formed.

According to the above water passage switching device of the present invention, since the pushed portion and the engaging portion are integrally formed, the structure of the rotational lock member can be simplified.

Preferably, in the water passage switching device of the present invention, the pushed portion is configured by a slope, and the operation cam presses the slope to pivot the rotational lock member about central axis.

According to the above water passage switching device of the present invention, since the pushed portion is configured by a slope, a linear movement of the operation cam can be converted into a rotational movement of the rotational lock member with a simple structure.

Preferably, in the water passage switching device of the present invention, the engaging portion is formed on the rotational lock member to extend in a direction parallel to the central axis.

According to the above water passage switching device of the present invention, since the engaging portion is formed to extend in a direction parallel to the central axis, the rotational lock member is not expanded in a radial direction by disposing the engaging portion, and the rotational lock member can be reduced in size.

Preferably, in the water passage switching device of the present invention, a plurality of lock member biasing members each identical to the lock member biasing member are provided and arranged at equal intervals on a circumference having the central axis as the center.

According to the above water passage switching device of the present invention, since the lock member biasing members are arranged at equal intervals on the circumference having the central axis as the center, a biasing force applied to the rotational lock member is made uniform, and the rotational lock member can be smoothly pivoted.

Preferably, the water passage switching device of the present invention further includes a rotational guide member that guides a pivotal movement of the rotational lock member.

According to the above water passage switching device of the present invention, since water passage switching device includes the rotational guide member that guides a pivotal movement of the rotational lock member, the rotational lock member can be smoothly pivoted.

Preferably, the water passage switching device of the present invention further includes a cam guide member that guides a movement of the operation cam in a direction approximately parallel to the central axis.

According to the above water passage switching device of the present invention, since the water passage switching device includes the cam guide member that guides the movement of the operation cam, the pushed portion is reliably pushed by the operation cam, and the rotational lock member can be efficiently pivoted by the movement of the operation cam.

Preferably, the water passage switching device of the present invention further includes a tilting movement restricting member that restricts a direction in which the tilting operation member is tilted to a plurality of predetermined directions.

According to the above water passage switching device of the present invention, since the direction in which the tilting operation member is tilted is restricted by the tilting movement restricting member, the plurality of operation cams can be prevented from being simultaneously pressed with the tilting movement restricting member, and the water passage switching device can be reliably operated.

Further, the present invention provides a hand shower head capable of switching between water-spouting states by opening and closing valves, including a shower head body, a water spray plate having a plurality of water spray holes, and the water passage switching device according to the present invention.

According to the above hand shower head of the present invention, the water passage switching device capable of switching between a plurality of water passages can be built in the shower head body without increasing the size of the shower head body, and the operation portion for opening and closing the plurality of valves can be collectively arranged to make it possible to improve the operability.

According to the water passage switching device of the present invention and the hand shower head comprising the water passage switching device, the plurality of valves can be opened and closed by a pushing operation, and the water passage switching device can be built in a small space.

According to the water passage switching device of the present invention and the hand shower head comprising the water passage switching device, the operation portion adapted to open and close the plurality of valves can be collectively arranged.

### BRIEF DESCRIPTION OF THE DRAWINGS

FIG. 1 is a perspective view illustrating an appearance of a hand shower head according to a first embodiment of the present invention.
FIG. 2 is a cross-sectional view of the hand shower head according to the first embodiment of the present invention.
FIG. 3 is a cross-sectional enlarged view of a water passage switching device housed in the hand shower head.
FIG. 4 is an exploded perspective view of the water passage switching device housed in the hand shower head.
FIG. 5 is a cross-sectional view illustrating water passages switched in the hand shower head.
FIG. 6 is a perspective view of a valve element housed in the water passage switching device.
FIG. 7 is a perspective view of an annular lock member provided in the water passage switching device.
FIG. 8 is a perspective view of a cam-constructing member provided in the water passage switching device.
FIG. 9 is a perspective view of an operation portion covering member provided in the water passage switching device.
FIG. 10 is a cross-sectional perspective view of the operation portion covering member provided in the water passage switching device.
FIG. 11 is a diagram for explaining actions of the water passage switching device housed in the hand shower head.
FIG. 12 is a diagram for explaining actions of the water passage switching device housed in the hand shower head.
FIG. 13 is a perspective view illustrating an entire faucet device containing a water passage switching device according to a second embodiment of the present invention.
FIG. 14 is a cross-sectional plane view of the faucet device containing the water passage switching device according to the second embodiment of the present invention.
FIG. 15 is a cross-sectional front view of the faucet device containing the water passage switching device according to the second embodiment of the present invention.
FIG. 16 is a cross-sectional side view of the faucet device containing the water passage switching device according to the second embodiment of the present invention.
FIG. 17 is a cross-sectional enlarged view of the water passage switching device according to the second embodiment of the present invention.
FIG. 18 is an exploded perspective view of the water passage switching device according to the second embodiment of the present invention.
FIG. 19 is a perspective view of a pivot receiving member used in the water passage switching device according to the second embodiment of the present invention.
FIG. 20 is a perspective view of a pivot member used in the water passage switching device according to the second embodiment of the present invention.
FIG. 21 is a perspective view of the faucet device illustrating a situation where a cover of a faucet device body containing the water passage switching device according to the second embodiment of the present invention is removed.

### DESCRIPTION OF EMBODIMENTS

A hand shower head according to a first embodiment of the present invention will now be described with reference to the accompanying drawings.

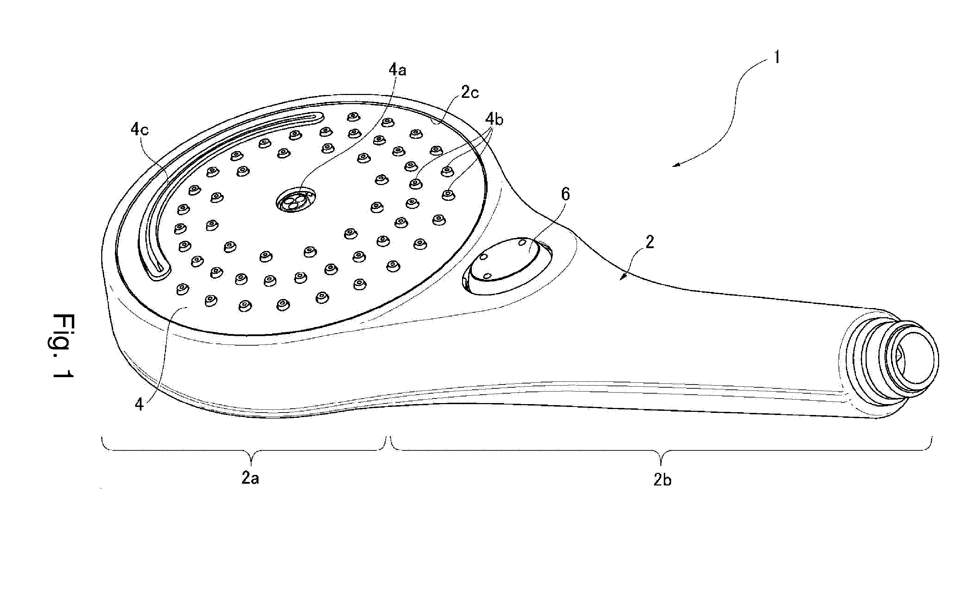

FIG. 1 is a perspective view illustrating an appearance of a hand shower head according to the first embodiment of the present invention.

As illustrated in FIG. 1, the hand shower head 1 of this embodiment comprises a shower head body 2, a water spray plate 4 attached to a distal end of this shower head body 2, and a push-button 6 for switching between water-stopping state and water-spouting state, and switching between three water spouting modes of the water-spouting state. Specifically, according to the push-button 6, it is possible to switch between water-stopping state and three water spouting modes, so that a total of four water spouting and stopping modes are switched to each other by the push-button 6. The shower head body 2 includes a gripper portion 2b for being gripped by a user, and a water spray portion 2a provided on the distal end side of and is thicker than the gripper portion 2b. The water spray portion 2a is formed with a circular opening 2c to which the water spray plate 4 is attached. Further, a shower hose (not shown) is connected to the base end side of the shower head body 2.

The water spray plate 4 is an approximately circular plate, in the center of which a water spray hole 4a for gyro-beat spouting, where spouting is performed with a water spray nozzle being rotated, is provided. A number of water spray holes 4b for spray spouting are provided around the water spray hole 4a, and an arc-shaped water spray hole 4c for waterfall-like spouting is provided on the distal end side on the shower head body 2. The push-button 6 is a disk-shaped button disposed in the gripper portion 2b of the shower head body 2 on the side closer to the opening 2c, and is directly operated by a user. By pushing this push-button 6 to tilt it to each direction, a water passage switching device housed in the shower head body 2 is actuated to switch between each water-spouting state of the gyro-beat spouting, spray spouting and waterfall-like spouting, and water-stopping state.

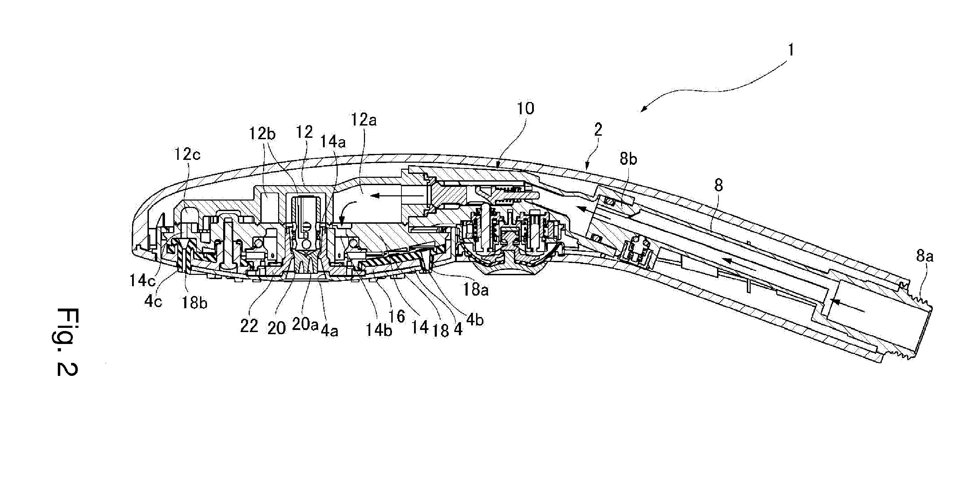

An internal structure of the hand shower head 1 according to the first embodiment of the present invention will be described below with reference to FIGS. 2 to 8.
FIG. 2 is a cross-sectional view of the hand shower head according to this embodiment. As illustrated in FIG. 2, the shower head body 2 houses a water flow passage forming member 8, a water passage switching device 10 connected to the distal end of the water flow passage forming member 8, and a first water spray chamber forming member 12 connected to the distal end of the water passage switching device 10. The shower head body 2 further houses a second water spray chamber forming member 14 attached to cover the first water spray chamber forming member 12, a third water spray chamber forming member 16 disposed on a back side of the water spray plate 4, and a water spray nozzle forming member 18 disposed on a back side of the third water spray chamber forming member 16. The shower head body 2 also houses a rotary nozzle 20 for performing a gyro-beat spouting, and a rotary nozzle supporting member 22 for supporting the rotary nozzle 20.

The water flow passage forming member 8 is an elongated tubular member, and has a base end formed as a connection end 8a which is connected to the shower hose (not shown). The water flow passage forming member 8 also has a distal end 8b to which the water passage switching device 10 is connected. An O-ring is disposed between the water flow passage forming member 8 and the water passage switching device 10 to ensure water-tightness therebetween. Details of the water passage switching device 10 will be described later.

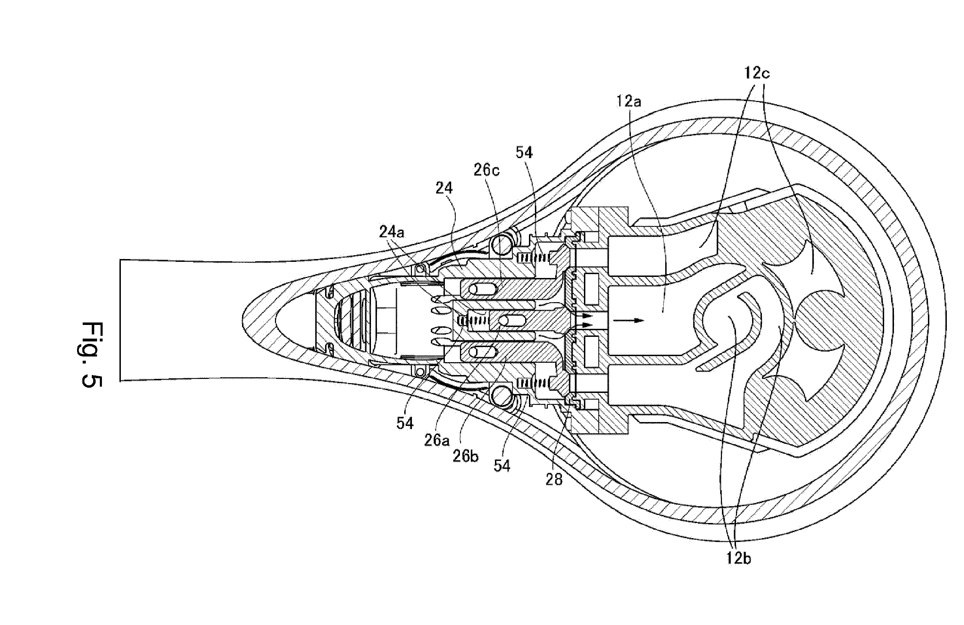

The first water spray chamber forming member 12 is a box-shaped member connected to the distal end side (downstream side) of the water passage switching device 10, and is housed in the back side of the water spray plate 4. An O-ring is disposed between the first water spray chamber forming member 12 and the water passage switching device 10 to ensure water-tightness therebetween. The first water spray chamber forming member 12 includes a first water passage 12a, a second water passage 12b and a third water passage 12c (also illustrated in FIG. 5) formed therein. Hot and cold water that has flowed out from the water passage switching device 10 passes through the first water passage 12a, the second water passage 12b and the third water passage 12c, and is guided to the water spray hole 4a for gyro-beat spouting, the water spray holes 4b for spray spouting and the water spray hole 4c for waterfall-like spouting, respectively. The side of the first water spray chamber forming member 12 which is closer to the water spray plate 4 is opened, and the second water spray chamber forming member 14 is attached to cover the opening.

The second water spray chamber forming member 14 is an approximately disk-shaped member disposed to cover the opening of the first water spray chamber forming member 12. The second water spray chamber forming member 14 is provided with a concave portion 14a in the center thereof so as to communicate with the first water passage 12a, into which the rotary nozzle 20 for gyro-beat spouting is rotatably disposed. The second water spray chamber forming member 14 is provided with a through-hole 14b so as to communicate with the second water passage 12b, and the hot and cold water that has passed the through-hole 14b is spouted from the water spray holes 4b for spray spouting. Further, the second water spray chamber forming member 14 is provided with a through-hole 14c so as to communicate with the third water passage 12c, and the hot and cold water that has passed the through-hole 14c is spouted from the water spray hole 4c for waterfall-like spouting.

The third water spray chamber forming member 16 is an approximately disk-shaped member disposed to overlap with the back side of the water spray plate 4. A space between the back side of the third water spray chamber forming member 16 and the front side of the second water spray chamber forming member 14 forms a water spray chamber for spray spouting.

The water spray nozzle forming member 18 is an approximately disk-shaped rubber member, and is disposed between the second water spray chamber forming member 14 and the third water spray chamber forming member 16. The water spray nozzle forming member 18 is provided with a number of water spray nozzles 18a for spray spouting. These water spray nozzles 18a are projected outside of the hand shower head 1 through a number of water spray holes 4b provided in the water spray plate 4 and a number of holes provided in the third water spray chamber forming member 16, each designed to align with a respective one of the water spray holes 4b. The water spray nozzle forming member 18 is also provided with a water spray nozzle 18b for waterfall-like spouting so as to be located at the distal end side of the hand shower head 1. The water spray nozzle 18b is projected outside of the hand shower head 1 through the arc-shaped water spray hole 4c provided in the water spray plate 4 and an arc-shaped hole provided in the third water spray chamber forming member 16 so as to be aligned with the water spray holes 4c. The water spray nozzle forming member 18 is made of a rubber, so that it is pressed against a fringe 14d of the second water spray chamber forming member 14, thereby to ensure water-tightness therebetween.

The rotary nozzle 20 is an approximately solid cylindrically-shaped member, and is provided with three spray nozzle holes 20a for gyro-beat spouting in an axial direction thereof. The rotary nozzle supporting member 22 is an approximately hollow cylindrically-shaped member for rotatably supporting the rotary nozzle 20. The rotary nozzle supporting member 22 rotatably receives and supports the rotary nozzle 20 therein, and is fitted into the concave portion 14a provided in the second water spray chamber forming member 14. When the hot and cold water flows into second water passage 12b of the first water spray chamber forming member 12, the flow force thereof urges the rotary nozzle 20 to make a precession (precessional movement) in the rotary nozzle supporting member 22, which causes the water spouting to be performed in a spiral manner.

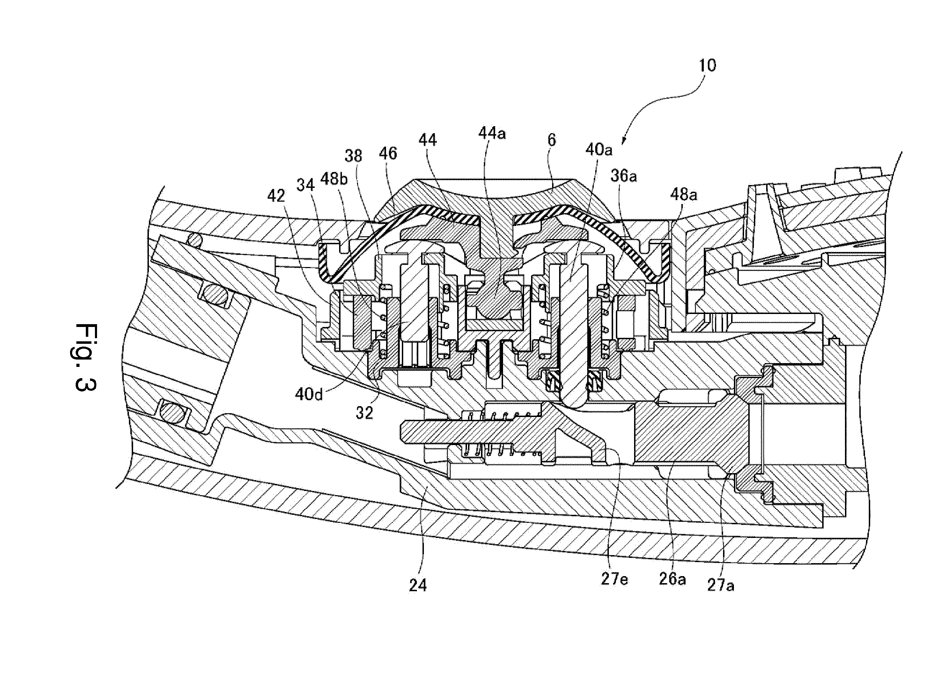

The water passage switching device 10 housed in the hand shower head 1 according to the first embodiment of the present invention will be described below with new reference to FIGS. 3 to 8.

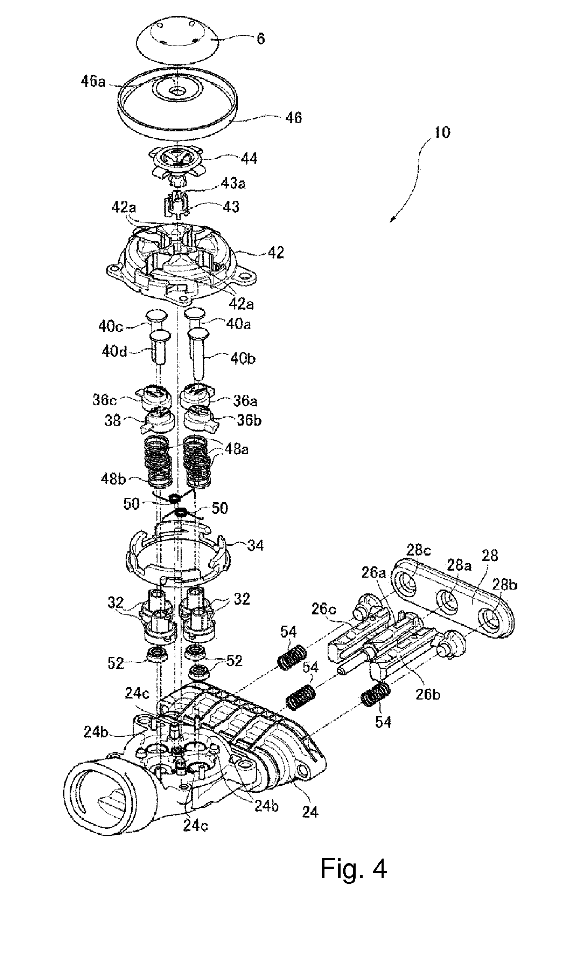

FIG. 3 is a cross-sectional enlarged view of a water passage switching device housed in the hand shower head. FIG. 4 is an exploded perspective view of the water passage switching device housed in the hand shower head.

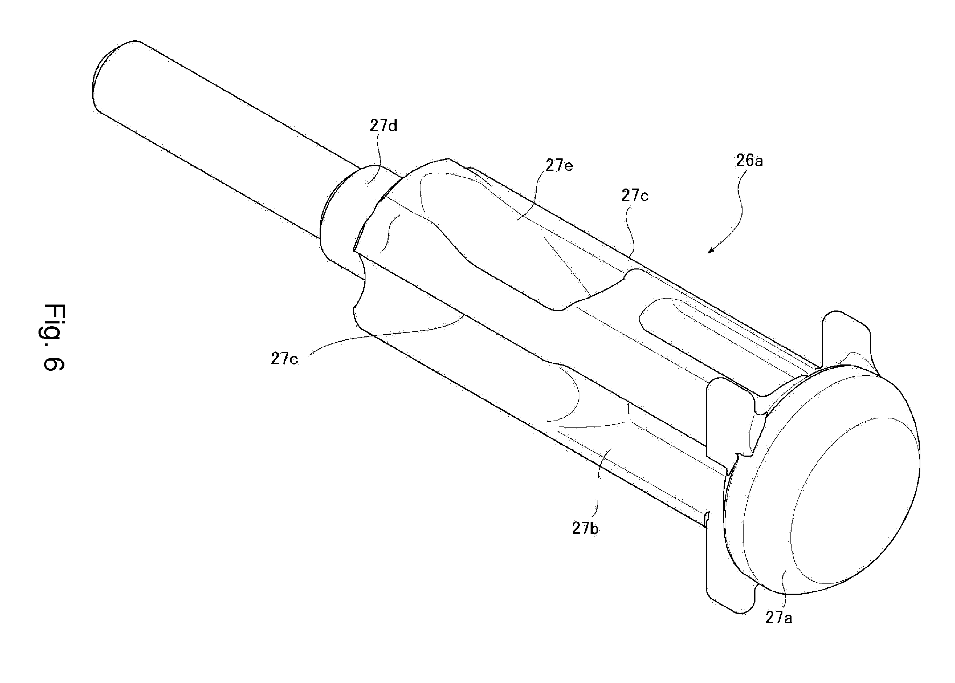

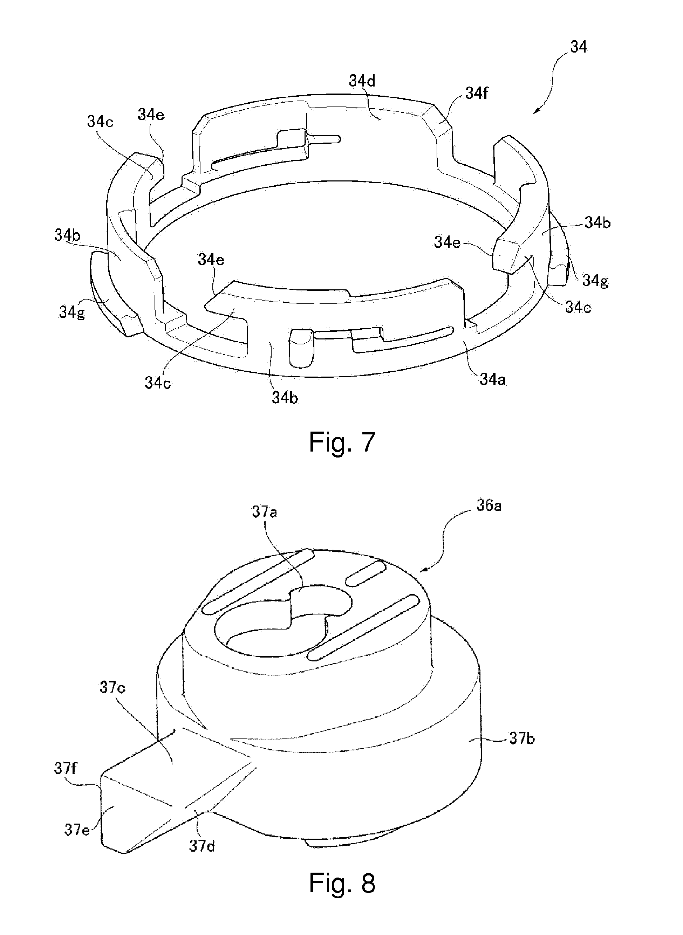

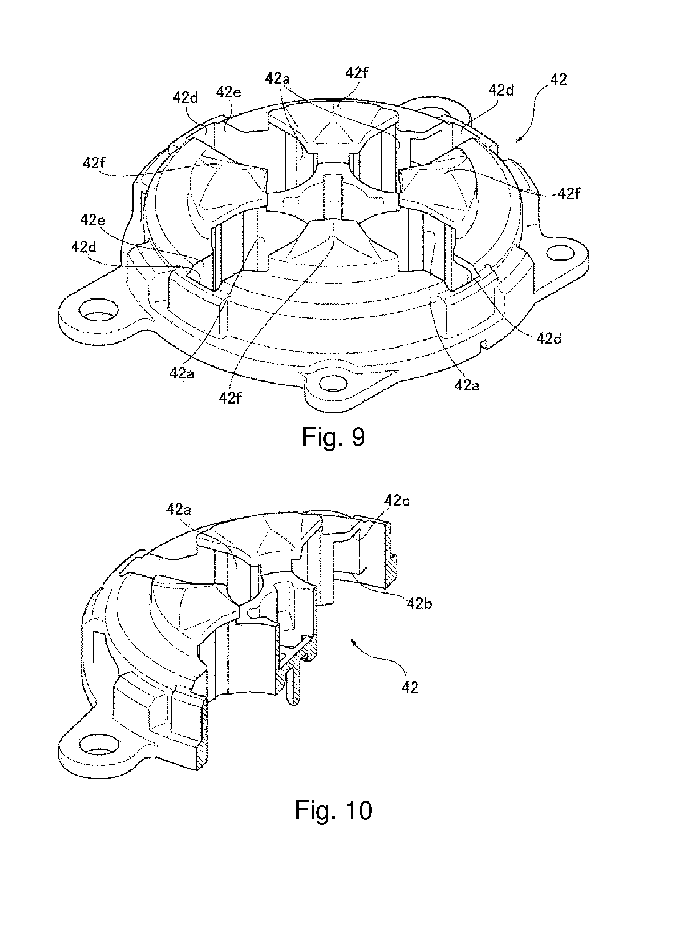

FIG. 5 is a cross-sectional view illustrating water passages switched in the hand shower head. FIG. 6 is a perspective view of a valve element housed in the water passage switching device. FIG. 7 is a perspective view of an annular lock member provided in the water passage switching device. FIG. 8 is a perspective view of a cam-constructing member provided in the water passage switching device. FIG. 9 is a perspective view of an operation portion covering member provided in the water passage switching device, and FIG. 10 is a cross-sectional perspective view of the operation portion covering member.

As illustrated in FIGS. 3 and 4, the water passage switching device 10 comprises a water passage switching device body 24, first, second and third valve elements 26a, 26b and 26c slidably arranged within the water passage switching device body 24, and a valve seat forming member 28 formed with three valve seats which are opened and closed by the valve elements.

The water passage switching device 10 further comprises four cylindrical support members 32, an annular lock member 34 which serves as a rotational lock member, first, second and third cam-constructing members 36a, 36b and 36c, a reset cam-constructing member 38, three operation rods 40a, 40b and 40c, an operation portion covering member 42, a pivoting member 44, and an elastic cover member 46.

As illustrated in FIGS. 3 to 5, the water passage switching device body 24 is an approximately tubular-shaped member which is configured such that the hot and cold water that has passed through the water flow passage forming member 8 is flowed therein. The water passage switching device body 24 includes therein three valve elements: a first valve element 26a, a second valve element 26b and a third valve element 26c arranged parallel to the width direction of the hand shower head 1 in side-by-side relation to each other. Further, these three valve elements are slidably supported in a longitudinal direction of the hand shower head 1, and are movable between a valve-open position and a valve-closed position. When any of the first, second and third valve elements is opened, the hot and cold water that has flowed in from the water flow passage forming member 8 passes through the opened valve seat to be flowed out from the water passage switching device 10.

As illustrated in FIG. 6, the first valve element 26a includes a seating portion 27a, a support frame 27b formed on the back side of the seating portion 27a, sliding protrusions 27c provided on both sides of the support frame 27b, and a spring attachment portion 27d formed on the back side of the support frame 27b.

The seating portion 27a is a disk-shaped portion provided at the distal end of the first valve element 26a. The valve hole provided in the valve seat forming member 28 is closed by the distal end of the seating portion 27a when it is seated on the valve seat forming member 28.

The support frame 27b is a rectangular parallelepiped frame formed on the back side of the seating portion 27a. The seating portion 27a is supported by the support frame 27b so as to be seated on a proper position of the valve seat forming member 28.

The sliding protrusions 27c are elongated protrusions each provided on both sides of the support frame 27b. The sliding protrusions 27c are slid along an elongated guiding portion 24a (FIG. 5) provided within the water passage switching device body 24. This causes the first valve element 26a to be linearly moved within the water passage switching device body 24.

The spring attachment portion 27d is a protrusion having a circular cross-section, formed on the back side of the support frame 27b. By fitting the spring attachment portion 27d inside a coil spring 54 (FIG. 5), the coil spring 54 is attached to the first valve element 26a. The coil spring 54 biases the first valve element 26a toward the valve-closed position.

Further, inside the support frame 27b, there is provided an inclined plane 27e which serves as moving direction conversion means. The inclined plane 27e is an inclined planar portion which is integrally formed inside the support frame 27b. The first valve element 26a is driven to a valve-opening direction by the inclined plane 27e when it is pushed by the distal end of the operation rod 40a, as described below.

The second valve element 26b and the third valve element 26c also have an approximately the same configuration as the first valve element 26a, as illustrated in FIGS. 4 and 5. However, the second and third valve elements are formed in L-shaped as a whole because the seating portion for opening and closing the valve seat and the support frame for supporting the seating portion are configured to be offset from each other. Additionally, in the second and third valve elements, the coil spring 54 is attached to the back side of the seating portion, which biases the second and third valve elements to the valve-closed position, respectively. Further, the support frame of the second valve element 26b and the third valve element 26c is also provided with an inclined plane as with the first valve element 26a. Each of the second and third valve elements is driven to the valve-opening direction by the inclined plane when it is pushed by a respective one of the operation rods 40b and 40c.

As illustrated in FIG. 4, the valve seat forming member 28 is an approximately oval-shaped plate-like member, in which three valve holes 28a, 28b and 28c are formed in line at regular intervals on which the first valve element 26a, the second valve element 26b and the third valve element 26c are seated, respectively.

As illustrated in FIGS. 3 and 4, the cylindrical support members 32 are cylindrically-shaped members which are arranged on the water passage switching device body 24 on the upper side (the side of water spray plate of the hand shower head 1) thereof in FIG. 3. The four cylindrical support members 32 are disposed on the upper circumference of the water passage switching device body 24 at regular intervals. Three coil springs 48a which serve as cam biasing means and a coil spring 48b which serves as resetting cam biasing means are disposed to surround each cylindrical support member 32, respectively. On each coil spring 48a, a first, second and third cam-constructing members 36a, 36b and 36c are disposed to cover each cylindrical support member 32, respectively. Therefore, each cam-constructing member is biased by the coil spring 48a toward an initial position (upper side in FIG. 3) along the cylindrical support member 32. Likewise, on the coil spring 48b, a reset cam-constructing member 38 is disposed to cover the cylindrical support member 32. Therefore, the reset cam-constructing member 38 is biased by the coil spring 48b toward an initial position (upper side in FIG. 3) along the cylindrical support member 32.

As illustrated in FIGS. 4 and 7, the annular lock member 34 is an annular-shaped member, and is disposed to surround the periphery of the four cylindrical support members 32. The annular lock member 34 is disposed in a rotatably movable manner around the cylindrical support members 32 between a locking position and an unlocking position about the central axis of the annular lock member 34. Further, the annular lock member 34 is biased toward the locking position by two torsion springs 50 (FIG. 4) which serve as lock member biasing means. Each torsion spring 50 is fitted in a respective one of shaft portions 24c (FIG. 4) which are formed on the water passage switching device body 24. Each torsion spring 50 has one end in engagement with the annular lock member 34 and the other end in engagement with the operation portion covering member 42 (FIG. 4), thereby to bias the annular lock member 34 to be rotated about its central axis toward the locking position. The two torsion springs 50 are disposed at regular intervals on a periphery centered on the central axis of the annular lock member 34

The annular lock member 34 further includes an annular-shaped annular portion 34a, three stand-out portions 34b extending from the annular portion 34a, engaging pawls 34c each formed on the distal end of the stand-out portions 34b, and a resetting stand-out portion 34d extending from the annular portion 34a.

As illustrated in FIG. 7, the three stand-out portions 34b are protrusions which extend from the annular portion 34a in a direction approximately parallel to the central axis of the annular portion 34a. At each of the distal end of the stand-out portions 34b, an engaging pawl 34c is formed which extends to a circumferential direction of the annular portion 34a. Accordingly, each stand-out portion 34b and engaging pawl 34c constructs an inverted L-shaped engaging portion, respectively. Each stand-out portion 34b is provided on the annular portion 34a at intervals of 90-degree central angle.

Further, on the top surface side (the side opposite to the annular portion 34a) of each engaging pawl 34c, a cam surface 34e is provided which is a slope inclined with respect to the annular portion 34a. The annular lock member 34 is driven from the locking position to the unlocking position against the biasing force of the torsion springs 50 by the cam surfaces 34e which serve as pushed portions when these cam surfaces are pushed from the upper side (the side opposite to the annular portion 34a) by the first, second and third cam-constructing members 36a, 36b and 36c. On the other hand, when the annular lock member 34 is returned to the locking position by the biasing force of the torsion springs 50, any of the cam-constructing members pressed down from the initial position is engaged with the lower side (the side facing to the annular portion 34a) of the engaging pawl 34c and held in the pressed-down position. In this embodiment, a cam surface 34e which serves as a pushed portion is formed on the top surface side of each engaging pawl 34c, so that the pushed portion and the engaging portion are integrally formed.

The resetting stand-out portion 34d is a protrusion which extends from the annular portion 34a in a direction approximately parallel to the central axis of the annular portion 34a. The resetting stand-out portion 34d is formed to have a width wider than the stand-out portion 34b, and is provided with a cam surface 34f which is inclined with respect to the annular portion 34a on a top surface side (the side opposite to the annular portion 34a) thereof. The resetting stand-out portion 34d is provided on the annular portion 34a at intervals of 90-degree central angle with respect to each of the two stand-out portions 34b. Therefore, the three stand-out portions 34b and the resetting stand-out portion 34d are provided at intervals of 90-degree central angle with each other.

The annular lock member 34 is driven from the locking position to the unlocking position against the biasing force of the torsion springs 50 by the cam surface 34f of the resetting stand-out portion 34d when it is pushed from the upper side (the side opposite to the annular portion 34a) by the reset cam-constructing member 38. However, since the resetting stand-out portion 34d is not provided with the engaging pawl 34c, when the pushing force acting on the reset cam-constructing member 38 is removed, the reset cam-constructing member 38 is returned to its initial position without being held.

As illustrated in FIGS. 3, 4 and 8, the first cam-constructing member 36a is a circular cap-like member having an opened lower side (the side facing to the water passage switching device body 24), and is configured to receive the cylindrical support member 32 in the opening (FIG. 3). This causes the first cam-constructing member 36a to be movably supported along the cylindrical support member 32. The first cam-constructing member 36a is formed with a gourd-shaped attaching hole 37a, and the operation rod 40a is attached to the first cam-constructing member 36a by being fitted in the attaching hole 37a (FIG. 3).

In addition, the first cam-constructing member 36a is formed with a flange 37b on the lateral side thereof in a manner to surround the periphery of the first cam-constructing member 36a. The first cam-constructing member 36a is biased upwardly (to the direction opposite to the water passage switching device body 24) by the coil spring 48a when it is engaged with the flange 37b.

Further, the first cam-constructing member 36a has an operation cam 37c provided in one location of the lateral side thereof in a manner to project to the radially outward direction. The lower side surface (the surface facing to the water passage switching device body 24) of the operation cam 37c is obliquely cut out, and is formed with an inclined cam surface 37d. The cam surface 37d is formed to have an angle conforming to the cam surface 34e of the annular lock member 34. When the first cam-constructing member 36a is pressed down from its initial position, the cam surface 37d of the first cam-constructing member 36a and the cam surface 34e of the annular lock member 34 make a sliding movement with each other, causing the annular lock member 34 to be rotated from the locking position toward the unlocking position.

In addition, as illustrated in FIG. 4, the second and third cam-constructing members 36b and 36c are configured in an identical shape to the first cam-constructing member 36a. An operation rod 40b is attached to the second cam-constructing member 36b, while an operation rod 40c is attached to the third cam-constructing member 36c. Further, the second and third cam-constructing members 36b and 36c are also biased upwardly (to the direction opposite to the water passage switching device body 24) by the coil spring 48a, as with the first cam-constructing member 36a. The cam surface provided on each of the second and third cam-constructing members 36b and 36c also makes a sliding movement with the corresponding cam surface 34e of the annular lock member 34, causing the annular lock member 34 to be rotated from the locking position toward the unlocking position.

Further, as illustrated in FIG. 4, the reset cam-constructing member 38 is also configured in an identical shape to the first cam-constructing member 36a. The operation cam provided on the reset cam-constructing member 38 functions as a resetting cam. An operation rod 40d is attached to the reset cam-constructing member 38, which is configured to be shorter than other operation rods. The reset cam-constructing member 38 is also biased upwardly (to the direction opposite to the water passage switching device body 24) by the coil spring 48b, as with the first cam-constructing member 36a. The cam surface provided on the reset cam-constructing member 38 is formed to have an angle conforming to the cam surface 34f provided on the resetting stand-out portion 34d of the annular lock member 34. When the reset cam-constructing member 38 is pressed down from its initial position, the cam surface of the reset cam-constructing member 38 and the cam surface 34f of the resetting stand-out portion 34d make a sliding movement with each other, causing the annular lock member 34 to be rotated from the locking position toward the unlocking position.

Each of the first, second and third cam-constructing members 36a, 36b and 36c, and the reset cam-constructing member 38 is disposed to receive a respective one of the four cylindrical support members 32. Each cylindrical support member 32 is arranged on a circumference which forms a concentric circle with the annular lock member 34. Therefore, the first, second and third cam-constructing members 36a, 36b and 36c, and the reset cam-constructing member 38 are arranged along the circumference of the annular lock member 34.

As illustrated in FIG. 4, the operation rods 40a, 40b and 40c which serve as valve actuating rods are shafts having a circular cross-section formed in an identical shape, the distal end of which is formed as a hemisphere surface. Each of the operation rods 40a, 40b and 40c is attached to a respective one of the first, second and third cam-constructing members 36a, 36b and 36c, and is arranged around a pivot point about which the pivoting member 44 makes a pivoting movement. Each of the operation rods 40a, 40b and 40c has a base end (the side opposite to the water passage switching device body 24) with expanded diameter whose end face is formed in a convex shape which is raised in the middle. The base end of the operation rod 40d attached to the reset cam-constructing member 38 is also formed in the same shape.

As illustrated in FIG. 3, the operation rod 40a attached to the first cam-constructing member 36a is projected to the lower side (in a direction of water passage switching device body 24) through the cylindrical support member 32. The projected operation rod 40a is inserted in the water passage switching device body 24 through the circular hole 24b (FIG. 4) provided in the water passage switching device body 24. The distal end of the inserted operation rod 40a abuts the first valve element 26a. In addition, a doughnut-shaped packing (gasket) 52 is disposed in each circular hole 24b to ensure water-tightness between the operation rod 40a and the water passage switching device body 24.

According to this configuration, when the first cam-constructing member 36a is downwardly (in a direction of water passage switching device body 24) moved along the cylindrical support member 32, the operation rod 40a is also downwardly moved together, causing the distal end of the operation rod 40a to push against the inclined plane 27e of the first valve element 26a. This drives the first valve element 26a to the valve-opening direction.

According to the similar configuration, when the second cam-constructing member 36b is pressed down, the operation rod 40b attached to the second cam-constructing member 36b pushes against the inclined plane provided on the second valve element 26b to drive the second valve element 26b to the valve-opening direction. When the third cam-constructing member 36c is pressed down, the operation rod 40c attached to the third cam-constructing member 36c pushes against the inclined plane provided on the third valve element 26c to drive the third valve element 26c to the valve-opening direction.

A structure of the operation portion covering member 42 will be described below with new reference to FIGS. 9 and 10. As illustrated in FIG. 4, the operation portion covering member 42 is a circular cup-like member having an opened lower side (the side facing to the water passage switching device body 24). The operation portion covering member 42 is attached to the water passage switching device body 24, inside of which the annular lock member 34, the first, second and third cam-constructing members 36a, 36b and 36c, the coil spring 48a, and the torsion springs 50 are housed.

As illustrated in FIG. 9, the operation portion covering member 42 is formed with four openings 42a on the upper end surface (the surface opposite to the water passage switching device body 24) thereof. Each of the upper portions of the first, second and third cam-constructing members 36a, 36b and 36c, and the reset cam-constructing member 38 is projected from the upper end surface of the operation portion covering member 42 through a respective one of the four openings 42a. Each flange 37b of each cam-constructing member and the reset cam-constructing member is engaged with an edge of each opening 42a, thereby to retain each cam-constructing member and the reset cam-constructing member inside the operation portion covering member 42.

The annular lock member 34 is provided with two flanges 34g (FIG. 7) on an outer periphery thereof. On the other hand, as illustrated in FIG. 10, the operation portion covering member 42 is formed with a stepped portion 42b on an inner lower area thereof. The rotational movement of the annular lock member 34 within the operation portion covering member 42 is guided by the stepped portion 42b when each flange 34g is received under the stepped portion 42b. Further, the operation portion covering member 42 has an inner ceiling surface 42c which is formed to make a sliding movement with respect to the stand-out portion 34b of the annular lock member 34 and the upper end surface of the resetting stand-out portion 34d. The rotational movement of the annular lock member 34 is also guided by this ceiling surface 42c. Therefore, the operation portion covering member 42 functions as a rotation guiding member for guiding the rotational movement of the annular lock member 34.

Further, each operation cam 37c of the first, second and third cam-constructing members and the reset cam-constructing member 38 is guided by the operation portion covering member 42 when it is moved between its initial position and pressed-down position in a direction parallel to the central axis of the annular lock member 34. Specifically, the distal end surface 37e (FIG. 8) of each operation cam 37c is slid and guided with respect to each inner wall surface 42d (FIG. 9) of the operation portion covering member 42. The vertical surface 37f on the opposite side of the cam surface 37d of each operation cam 37c is slid and guided with respect to each vertical surface 42e (FIG. 9) which is oriented in a radial direction of the operation portion covering member 42. Therefore, the operation portion covering member 42 functions as a cam guiding member for guiding a movement of each operation cam 37c in a direction parallel to the central axis of the annular lock member 34.

As illustrated in FIG. 4, the pivoting member 44 is an approximately disk-shaped member. The pivoting member 44 is provided, at the center thereof, with a downwardly protruding pivoting protrusion 44a (FIG. 3) whose distal end is formed as a spherical surface. The distal end of the pivoting protrusion 44a is received in a pivot concave portion 43a of a pivot-receiving member 43. The contact point between the distal end of the pivoting protrusion 44a and the pivot concave portion 43a functions as a pivot point which is located on the central axis of the annular lock member 34. The pivot-receiving member 43 is received in a concave portion provided at the center of the upper end surface of the operation portion covering member 42. When the pivoting member 44 is tilted to any direction about the pivot point, the underside surface (the surface facing to the water passage switching device body 24) of the pivoting member 44 pushes the upper end of any of the operation rods 40a, 40b and 40c, causing the cam-constructing member along with the operation rod to be moved to its pressed-down position. When the pivoting member 44 is tilted toward the reset cam-constructing member 38, the pivoting member 44 pushes the reset cam-constructing member 38, causing the reset cam-constructing member 38 to be moved to its pressed-down position.

In this regard, the base end of each operation rod 40a, 40b, 40c and 40d having an expanded diameter is formed as a concave surface, which is an approximately the same shape as a trajectory made by the pivoting member 44 when it is tilted. This configuration makes it possible to reduce the wear caused by a contact as compared to the case of forming the base end as a flat surface. Further, the base end and a surface of the pivoting member 44 contacting with the base end are formed to be coincident with each other and to have a large contact area. Specifically, each operation rod and the pivoting member 44 are configured to make linear contact or surface contact with each other. While the base end of each operation rod 40a, 40b, 40c and 40d has an expanded diameter (the base end is expanded in all directions) in this embodiment, it is also possible to configure each operation rod to have a base end formed in a shape expanded only in radially outward direction of a circle centered on the pivot point. This makes it possible to position the contact point between the base end of each operation rod and the pivoting member 44 in radially outward location, while disposing each operation rod in proximity to the center of the annular lock member 34. This configuration makes it possible to set the tilting angle of the pivoting member 44 needed to move each operation rod to be small.

On the other hand, each of four raised portions 42f is provided between adjacent ones of the four openings 42a on an upper surface of the operation portion covering member 42 (FIG. 9). A ridge line of each of the raised portions 42f is oriented in a radial direction of the operation portion covering member 42, and each raised portion 42f becomes highest at the intermediate position between the adjacent openings 42a. Thus, in the event of tilting movement of the pivoting member 44 in a direction intermediate between the cam-constructing members or in a direction intermediate between the cam-constructing member and the reset cam-constructing member, the pivoting member 44 and the ridge line of the raised portion 42f interfere with each other to prevent the tilting movement in that direction. For this reason, the pivoting member 44 is always tilted in a direction of any of the cam-constructing members or the reset cam-constructing member. Thus, the operation portion covering member 42 functions as a tilting movement restricting member for restricting the tilting movement of the pivoting member 44 in a predetermined four directions.

As illustrated in FIG. 4, the elastic cover member 46 is an approximately circular bowl-shaped elastic member, and is formed with an opening 46a in the center thereof. The push-button 6 is attached to the pivoting member 44 through the opening 46a (FIG. 3). Specifically, the elastic cover member 46 is fixed by being sandwiched between the push-button 6 and the pivoting member 44. In this way, the push-button 6 and the pivoting member 44 are integrated and function as a pivotally movable tilting operation member, where the push-button 6 constitutes an operation portion of the tilting operation member to which an operation force is applied by a user, and the pivoting protrusion of the pivoting member 44 constitutes a tilting shaft of the tilting operation member. The elastic cover member 46 is disposed to cover an upper end portion (a portion opposite to the water passage switching device body 24) of the operation portion covering member 42. The elastic cover member 46 is composed of a flexible elastic body, and thus when a push operation is performed on the push-button 6, it is elastically deformed to allow tilting movement of the push-button 6 and the pivoting member 44 about the pivot point. When the operation force acting on the push-button 6 is removed, the elastic cover member 46 is returned to the original shape due to its elasticity to cause the push-button 6 and the pivoting member 44 to be returned to their untilted position.

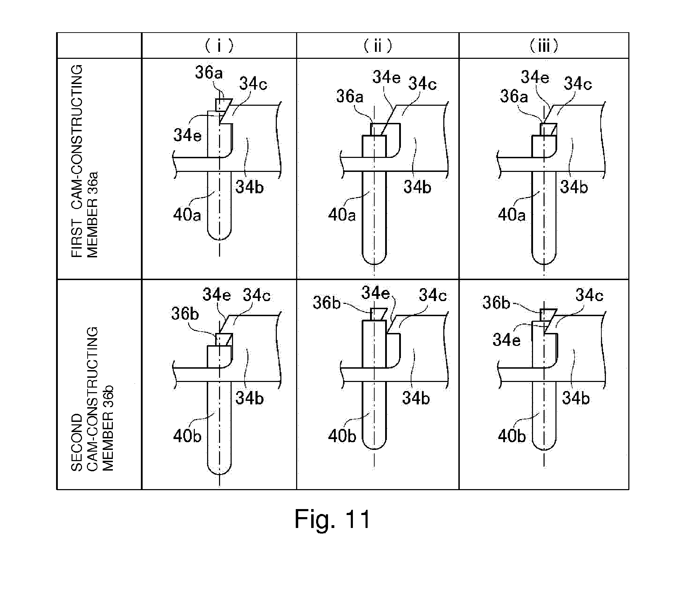

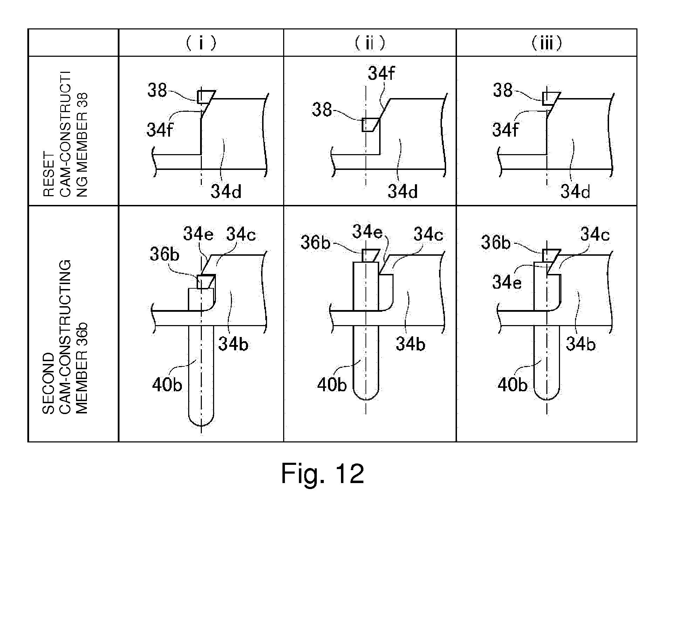

Actions of the hand shower head 1 according to the first embodiment of the present invention will be described below with new reference to FIGS. 11 and 12. FIGS. 11 and 12 are diagrams for explaining actions of the water passage switching device 10 housed in the hand shower head 1.

Firstly, an outline of actions of the hand shower head 1 will be described with reference to FIGS. 1, 2 and 5.
When a user of the hand shower head 1 pushes the push-button 6 to tilt it to the side of the water spray plate 4 (the side where the first cam-constructing member 36a and the operation rod 40a are disposed), the first valve element 26a is caused to be in a valve-open state to initiate water spouting. When the first valve element 26a is caused to be in a valve-open state, the hot and cold water that has flowed from the water flow passage forming member 8 into the water passage switching device 10 flows through the periphery of the first valve element 26a into the valve hole 28a of the valve seat forming member 28 as indicated by arrows in FIGS. 2 and 5 (FIGS. 2 and 5 illustrates the valve-closed state). The hot and cold water that has passed through the valve hole 28a flows into the first water passage 12a of the first water spray chamber forming member 12, and then flows through the through-hole 14b (FIG. 2) of the second water spray chamber forming member 14 which is formed to communicate with the first water passage 12a into a space between the second water spray chamber forming member 14 and the water spray nozzle forming member 18. The hot and cold water that has flowed into this space is spouted from a number of water spray nozzle 18a provided in the water spray nozzle forming member 18.

Then, when the user pushes the push-button 6 to tilt it laterally (to the side where the second cam-constructing member 36b and the operation rod 40b are disposed), the first valve element 26a that has been opened is moved to the valve-closed position whereas the second valve element 26b is moved to the valve-open position. It is noted that the action of the water passage switching device 10 for moving the first valve element 26a to the valve-closed position and moving the second valve element 26b to the valve-open position will be described later. When the second valve element 26b is moved to the valve-open position, the hot and cold water that has flowed into the water passage switching device 10 flows through the periphery of the second valve element 26b into the valve hole 28b of the valve seat forming member 28. The hot and cold water that has passed through the valve hole 28b flows into the second water passage 12b of the first water spray chamber forming member 12. The hot and cold water that has flowed into the second water passage 12b flows through the through-hole 14a (FIG. 2) of the second water spray chamber forming member 14 which is formed to communicate with the second water passage 12b, and is spouted from the spray nozzle hole 20a of the rotary nozzle 20. The rotary nozzle 20 is urged to make a precessional rotary movement by the force of the hot and cold water that has flowed into the second water passage 12b to cause the hot and cold water spouted from the spray nozzle hole 20a to be a spiral gyro-beat spouting.

Further, when the user pushes the push-button 6 to tilt it laterally (to the side where the third cam-constructing member 36c and the operation rod 40c are disposed), the second valve element 26b that has been opened is moved to the valve-closed position whereas the third valve element 26c is moved to the valve-open position. When the third valve element 26c is moved to the valve-open position, the hot and cold water that has flowed into the water passage switching device 10 flows through the periphery of the third valve element 26c into the valve hole 28c of the valve seat forming member 28. The hot and cold water that has passed through the valve hole 28c flows into the third water passage 12c of the first water spray chamber forming member 12. The hot and cold water that has flowed into the third water passage 12c flows out from the through-hole 14c which is formed to communicate with the third water passage 12c. The hot and cold water that has flowed out from the through-hole 14c is spouted in a waterfall-like manner from an arc-shaped water spray nozzle 18b provided opposite the through-hole 14c in the water spray nozzle forming member 18.

Then, when the user pushes the push-button 6 to tilt it to the side opposite to the water spray plate 4 (to the side where the reset cam-constructing member 38 is disposed), the third valve element 26c that has been opened is moved to the valve-closed position and the hand shower head 1 becomes in a water-stopping state.

Actions of the water passage switching device 10 will be described below with reference to FIGS. 11 and 12. FIG. 11 is an explanatory diagram of actions of the water passage switching device 10, illustrating the operation cam of the cam-constructing member, the operation rod attached to the cam-constructing member, and a part of the annular lock member 34, and representing a positional relationship therebetween. The upper stage of FIG. 11 sequentially illustrates a process that the first cam-constructing member 36a is pressed down from the initial position to the pressed-down position and held therein, and the lower stage sequentially illustrates a process that the second cam-constructing member 36b which has been held in the pressed-down position is returned to the initial position simultaneously with the action of the upper stage.

Firstly, in the situation of FIG. 11(i), the first cam-constructing member 36a and the operation rod 40a attached thereto are in the initial position, and the first valve element 26a disposed in association with the operation rod 40a is in the valve-closed position (the position of the first valve element 26a in FIG. 3).
p At the same time, in the situation of FIG. 11(i), the second cam-constructing member 36b and the operation rod 40b attached thereto is in the pressed-down position, and the second valve element 26b disposed in association with the operation rod 40b is in the valve-open position (the position where the operation rod 40b is pressed downward in FIG. 3 and the abutting valve element 26b is moved to the left).

The second cam-constructing member 36b is biased toward the initial position by the coil spring 48a. However, as illustrated in the lower stage of FIG. 11 (i), the second cam-constructing member 36b and the operation rod 40b is held in the pressed-down position against the biasing force of the coil spring 48a because the operation cam of the second cam-constructing member 36b is engaged with the corresponding engaging pawl 34c of the annular lock member 34 which is in the locking position.

Then, when the user operates the push-button 6 to press down the first cam-constructing member 36a, the operation cam 37c of the first cam-constructing member 36a presses the abutting cam surface 34e of the annular lock member 34, as illustrated in FIG. 11(ii). This causes the annular lock member 34 to be rotated in a counterclockwise direction in FIG. 4 (to the right side in FIG. 11) against the biasing force of the torsion springs 50.

When the first cam-constructing member 36a is pressed down to the position as illustrated in the upper stage of FIG. 11(ii), the annular lock member 34 is moved to the unlocking position. Simultaneously, as illustrated in the lower stage of FIG. 11(ii), the engaging pawl 34c that has been engaged with the second cam-constructing member 36b is also moved to the right side in FIG. 11. This causes the engagement between the second cam-constructing member 36b and the engaging pawl 34c to be released, and the second cam-constructing member 36b is returned to the initial position by the biasing force of the coil spring 48a. When the second cam-constructing member 36b and the operation rod 40b are returned to the initial position, the second valve element 26b abutting the operation rod 40b is moved to the valve-closed position by the biasing force of the coil spring 54 that is biasing the second valve element 26b.

Further, as illustrated in the upper stage of FIG. 11(iii), when the first cam-constructing member 36a is pressed down to the position where it is not engaged with the engaging pawl 34c, the annular lock member 34 is rotated in a clockwise direction in FIG. 4 (to the left side in FIG. 11) by the biasing force of the torsion springs 50 and moved to the locking position. When the annular lock member 34 is moved to the locking position, the first cam-constructing member 36a is set in the underside of the engaging pawl 34c to be engaged with the engaging pawl 34c, as illustrated in the upper stage of FIG. 11(iii). This causes the first cam-constructing member 36a to be held in the pressed-down position even after the removal of operation force applied by the user. Further, during the movement of the first cam-constructing member 36a and the operation rod 40a to the pressed-down position, the distal end of the operation rod 40a pushes the inclined plane 27e of the first valve element 26a, and the first valve element 26a is moved to the left side in FIG. 3 against the biasing force of the coil spring 54 attached thereto. When the first cam-constructing member 36a is held in the pressed-down position, the first valve element 26a abutting the operation rod 40a is held in the valve-open position, so that the water-spouting state is maintained.

As described above, in the situation of FIG. 11(i), the second cam-constructing member 36b is held in the pressed-down position and the second valve element 26b is opened, so that the gyro-beat spouting is being performed. In this situation, when the first cam-constructing member 36a is pressed down from the initial position to the pressed-down position, the second cam-constructing member 36b is moved from the pressed-down position to the initial position and the second valve element 26b is closed, as illustrated in FIG. 11(ii). Simultaneously, the first valve element 26a is opened to initiate the spray spouting. Further, as illustrated in FIG. 11(iii), the first cam-constructing member 36a which is pressed down to the pressed-down position is held therein, so that the spouting-state is maintained even after removal of the pushing force.

While the example as shown in FIG. 11 has described the case where the first cam-constructing member 36a is pushed during the gyro-beat spouting is performed, the water passage switching device 10 of this embodiment acts such that when a cam-constructing member for any water spouting is pressed down during the performance of another water spouting, the prior spouting is stopped and the spouting of the pattern corresponding to the pushed cam-constructing member is initiated.

Actions of the water passage switching device 10 when the reset cam-constructing member 38 is pushed will be described below with reference to FIG. 12.
FIG. 12 is an explanatory diagram of actions of the water passage switching device 10, illustrating a positional relationship between the operation cam of the reset cam-constructing member 38, the operation cam of the cam-constructing member, the operation rod attached to the cam-constructing member, and a part of the annular lock member 34. The upper stage of FIG. 12 sequentially illustrates a process that the reset cam-constructing member 38 is pressed down from the initial position to the pressed-down position and again returned to the initial position, and the lower stage sequentially illustrates a process that the second cam-constructing member 36b which has been held in the pressed-down position is returned to the initial position simultaneously with the action of the upper stage.

Firstly, in the situation of FIG. 12(i), the reset cam-constructing member 38 is in the initial position. On the other hand, in the situation of FIG. 12(i), the second cam-constructing member 36b and the operation rod 40b attached thereto are held in the pressed-down position, and the second valve element 26b is in the valve-open position.

Then, when the user operates the push-button 6 to press down the reset cam-constructing member 38, the cam surface 34f of the annular lock member 34 abutting the resetting cam of the reset cam-constructing member 38 is pressed, as illustrated in FIG. 12(ii). This causes the annular lock member 34 to be rotated in a counterclockwise direction in FIG. 4 (to the right side in FIG. 12) against the biasing force of the torsion springs 50.

When the reset cam-constructing member 38 is pressed down to the position as illustrated in the upper stage of FIG. 12(ii), the annular lock member 34 is moved to the unlocking position. Simultaneously, as illustrated in the lower stage of FIG. 12(ii), the engaging pawl 34c that has been engaged with the second cam-constructing member 36b is also moved to the right side in FIG. 12. This causes the engagement between the second cam-constructing member 36b and the engaging pawl 34c to be released, and the second cam-constructing member 36b is returned to the initial position and the second valve element 26b is moved to the valve-closed position.

Further, as illustrated in the upper stage of FIG. 12(ii), since the resetting stand-out portion 34d abutting the reset cam-constructing member 38 is not provided with an engaging pawl, the annular lock member 34 is maintained in the unlocking position even in the situation where the reset cam-constructing member 38 is pressed down to the pressed-down position.

Then, when the operation force applied by the user is removed, the reset cam-constructing member 38 is returned to the initial position by the biasing force of the coil spring 48a as illustrated in the upper stage of FIG. 12(iii).
When the reset cam-constructing member 38 is returned to the initial position, the annular lock member 34 is rotated in a clockwise direction in FIG. 4 (to the left side in FIG. 12) by the biasing force of the torsion springs 50 and moved to the locking position.

As described above, in the situation of FIG. 12(i), the second cam-constructing member 36b is held in the pressed-down position and the second valve element 26b is opened, so that the gyro-beat spouting is being performed. In this situation, when the reset cam-constructing member 38 is pressed down from the initial position to the pressed-down position, the second cam-constructing member 36b is moved from the pressed-down position to the initial position and the second valve element 26b is closed and the hand shower head 1 becomes in a water-stopping state, as illustrated in FIG. 12(ii). Further, as illustrated in FIG. 12, when the operation force applied by the user does not act any more, the reset cam-constructing member 38 is returned to the initial position.

While the example as shown in FIG. 12 has described the case where the reset cam-constructing member 38 is pushed during the gyro-beat spouting is performed, the water passage switching device 10 of this embodiment acts such that when the reset cam-constructing member 38 is pressed down during the performance of any water spouting, the prior spouting is stopped and all the cam-constructing members and the reset cam-constructing member 38 are returned to the initial position.
In the embodiment described above, the coil spring 48a is disposed as the cam biasing unit. However, other configuration can also function as the cam biasing unit. For example, another member such as a rubber elastic member that biases the first cam-constructing member 36a can also function as the cam biasing unit. Furthermore, in the embodiment described above, the first valve element 26a is biased by the coil spring 54 in the valve-closed direction. When the first valve element 26a is moved in the valve-closed direction, the operation rod 40a that abuts the inclined plane 27e of the first valve element 26a is pushed upward, and the first cam-constructing member 36a is also pushed upward. Thus, the coil spring 54 that biases the first valve element 26a can also function as the cam biasing unit.
Alternatively, the first valve element 26a is also biased in the valve-closed direction by a supply-water pressure supplied to the water passage switching device 10. Thus, since the first cam-constructing member 36a is also biased upward by the supply-water pressure, the supply-water pressure can also function as the cam biasing unit. The same applies to units for biasing the second cam-constructing member 36b and the third cam-constructing member 36c. Further, in the resetting cam biasing unit, similarly, a configuration other than the coil spring 48b can also function as the resetting cam biasing unit.

### EXPLANATION OF CODES

1. hand shower head according to a first embodiment of the present invention
2. shower head body
2a. water spray portion
2b. gripper portion
2c. opening
4. water spray plate
4a. water spray hole
4b. water spray hole
4c. water spray hole
6. push-button (operation portion of the tilting operation member)
8. water flow passage forming member
8a. connection end
8b. distal end (opening-closing mechanism body)
10. water passage switching device
12. first water spray chamber forming member
12a. first water passage
12b. second water passage
12c. third water passage
14. second water spray chamber forming member
14a. concave portion
14b. through-hole
14c. through-hole
14d. fringe
16. third water spray chamber forming member
18. water spray nozzle forming member
18a. water spray nozzle
18b. water spray nozzle
20. rotary nozzle
20a. spray nozzle hole
22. rotary nozzle supporting member
24. water passage switching device body
24a. guiding portion
24b. circular hole
24c. shaft portion
26a. first valve element
26b. second valve element
26c. third valve element
27a. seating portion
27b. support frame
27c. sliding protrusion
27d. spring attachment portion
27e. inclined plane
28. valve seat forming member
28a, 28b, 28c. valve hole
32. cylindrical support member
34. annular lock member (rotational lock member)
34a. annular portion
34b. stand-out portion
34c. engaging pawl
34d. resetting stand-out portion
34e. cam surface (pushed portion)
34f. cam surface
34g. flange
36a. first cam-constructing member
36b. second cam-constructing member
36c. third cam-constructing member
37a. attaching hole
37b. flange
37c. operation cam
37d. cam surface
37e. distal end surface
37f. vertical surface
38. reset cam-constructing member
40a, 40b, 40c. operation rod (valve actuating rod)
42. operation portion covering member (tilting movement restricting member)
42a. opening
42b. stepped portion
42c. ceiling surface
42d. inner wall surface
42e. vertical surface
42f. raised portion
43. pivot-receiving member
43a. pivot concave portion
44. pivoting member (tilting operation member)
44a. pivoting protrusion (tilting shaft of the tilting operation member)
46. elastic cover member
46a. opening
48a. coil spring (cam biasing means)
48b. coil spring (resetting cam biasing means)
50. torsion spring (lock member biasing means)
52. packing (gasket)
54. coil spring

## Claims

1. A water passage switching device capable of switching between water passages by opening and closing a plurality of valves by operation of a user, comprising:
a rotational lock member disposed between a locking position and an unlocking position such that the rotational lock member is pivoted about a central axis;
a plurality of operation cams disposed along the rotational lock member, movably supported in directions approximately parallel to the central axis, and moved between an initial position and a pressed-down position;
a plurality of operation members that are disposed to be moved together with the operation cams and cause an operation force to be applied to valve elements of a plurality of valves to open and close the valve elements;
a cam biasing unit that biases the plurality of operation cams to the initial position;
a plurality of pushed portions that are disposed in the rotational lock member and abutted with the operation cams to pivot the rotational lock member about the central axis; and
a plurality of engaging portions formed on the rotational lock member, each of the engaging portions including an engaging pawl engaged with the operation cam to keep the operation cam at the pressed-down position,
the device further comprising a lock member biasing member biasing the rotational lock member toward the locking position, wherein
when a first operation cam of the plurality of operation cams is pressed from the initial position by an operation force, the pushed portion is pushed by the first operation cam to pivot the rotational lock member from the locking position to the unlocking position, thereby canceling engagement between a second operation cam kept at the pressed-down position and the engaging pawl to return the second operation cam to the initial position, and when the first operation cam is pressed to the pressed-down position, the rotational lock member is returned to the locking position to keep the first operation cam at the pressed-down position.

2. The water passage switching device according to claim 1, further comprising:
a resetting cam disposed along the rotational lock member, movably supported in a direction approximately parallel to the central axis, and moved between an initial position and a pressed-down position;
a resetting cam biasing unit that biases the resetting cam toward the initial position; and
a resetting protrusion that is provided on the rotational lock member and pivots the rotational lock member to the unlocking position when the resetting cam is pressed to the pressed-down position, wherein
the resetting cam is returned to the initial position when a pressing force applied to the resetting cam is removed.

3. The water passage switching device according to claim 1 or 2, further including a tilting operation member that is tilted about a pivot point arranged on the central axis to press the operation cams to the pressed-down position.

4. The water passage switching device according to any one of claims 1 to 3, wherein the rotational lock member is an annular member.

5. The water passage switching device according to any one of claims 1 to 4, wherein the cam biasing unit is configured by a member that biases the operation cam to the initial position.

6. The water passage switching device according to any one of claims 2 to 5, wherein the resetting cam biasing unit is configured by a member that biases the resetting cam to the initial position.

7. The water passage switching device according to any one of claims 1 to 6, wherein the pushed portion and the engaging portion which are disposed on the rotational lock member are integrally formed.

8. The water passage switching device according to any one of claims 1 to 7, wherein the pushed portion is configured by a slope, and the operation cam pushes the slope to pivot the rotational lock member about the central axis.

9. The water passage switching device according to any one of claims 1 to 8, wherein the engaging portion is formed on the rotational lock member to extend in a direction parallel to the central axis.

10. The water passage switching device according to any one of claims 1 to 9, wherein a plurality of lock member biasing members each identical to the lock member biasing member are provided and arranged at equal intervals on a circumference having the central axis as a center.

11. The water passage switching device according to any one of claims 1 to 10, further comprising a rotational guide member that guides a pivotal movement of the rotational lock member.

12. The water passage switching device according to any one of claims 1 to 11, further comprising a cam guide member that guides a movement of the operation cam in a direction approximately parallel to the central axis.

13. The water passage switching device according to any one of claims 3 to 12, further comprising a tilting movement restricting member that restricts a direction in which the tilting operation member is tilted to a plurality of predetermined directions.

14. A hand shower head capable of switching between water-spouting states by opening and closing valves, comprising:
a shower head body;
a water spray plate having a plurality of water spray holes; and
the water passage switching device according to any one of claims 1 to 13.
